# EUROPÄISCHE PATENTANMELDUNG

(11) **EP 1 143 039 A2**
(43) Veröffentlichungstag der Anmeldung: **10.10.2001**
(21) Anmeldenummer: 01113153.9
(22) Anmeldetag: 07.10.1999
(51) Int. Cl.: C25D 21/12, G05D 21/00, C25D 11/36

(54) **Verfahren zum Steuern einer Behandlungslinie**

(30) Priorität: 15.12.1998 DE 19857799
(62) Teilanmeldung aus: 99947479.4
(71) Anmelder: Henkel Kommanditgesellschaft auf Aktien, 40589 Düsseldorf (DE)
(72) Erfinder: Seemann, Jens, Dr., 40597 Düsseldorf (DE); Bartik-Himmler, Ibolya, Dr., 42113 Wuppertal (DE); Opitz, Werner, 40764 Langenfeld (DE); Kling, Hans-Willi, Dr., 42277 Wuppertal (DE)

(57) **Zusammenfassung**

Verfahren zum Steuern einer Behandlungslinie, wobei man
a) eine Korrelation zwischen einem oder mehreren variablen Parametern der chemischen und/oder physikalischen Prozesse der Behandlungslinie und einer oder mehreren Kenngrößen, die für den Erfolg der Behandlung charakteristisch sind, erstellt, hieraus Regeln ableitet, die die Abhängigkeit der Kenngröße oder der Kenngrößen von den variablen Parametern beschreiben, und die Korrelation und/oder die hieraus abgeleiteten Regeln in einem Steuersystem für die Behandlungslinie abspeichert,
b) kontinuierlich oder diskontinuierlich die eine oder mehrere Kenngrößen mißt
c) bei einer Abweichung dieser Kenngrößen von einem vorgegebenen Sollwertbereich denjenigen oder diejenigen variablen Parameter, der oder die am stärksten mit dieser Kenngröße korreliert sind, in diejenige Richtung verändert, die der Abweichung der Kenngröße oder der Kenngrößen vom Sollbereich entgegenwirkt.

## Beschreibung

Die Erfindung betrifft ein Verfahren zum Steuern einer Behandlungslinie, in der ein Werkstück unter Einwirkung chemischer und/oder physikalischer Prozesse bearbeitet wird. Insbesondere betrifft sie Vorgänge, bei denen die Oberfläche des Werkstücks chemisch verändert und/oder beschichtet wird. Ein Anwendungsfall hierfür ist die Phosphatierung und die anschließende Lackierung von Metallen, insbesondere von Automobilkarossen.

Es gibt eine Vielzahl technischer Prozesse, bei denen ein Werkstück unter Verwendung chemischer und/oder physikalischer Behandlungsverfahren bearbeitet wird. Ein Ziel dieser Bearbeitung kann in einer chemischen Veränderung der Oberfläche des Werkstücks oder in dessen Beschichtung, beispielsweise dessen Lackierung, liegen. Es ist häufiges Ziel solcher Verfahren, den Oberflächen der Werkstücke erwünschte technische oder ästhetische Eigenschaften zu verleihen. Beispielsweise genannt seien Verfahren, mit denen die Oberfläche der Werkstücke vor Korrosion geschützt werden können oder mit denen man der Werkstückoberfläche ein erwünschtes, ästhetisch ansprechendes Aussehen verleiht.

In allen diesen Fällen hat die Behandlung der Werkstücke unter Einwirkung chemischer und/oder physikalischer Prozesse das Ziel, bestimmte technische oder ästhetische Effekte zu bewirken. Ob der erwünschte Erfolg eintritt, hängt von dem Substrat und von den gewählten Parametern der chemischen und/oder physikalischen Prozesse ab. Je genauer man weiß, welche wählbaren Parameter das erwünschte Ergebnis wie beeinflussen, können die Parameter so eingestellt werden, daß das erwünschte Ergebnis möglichst sicher erreicht wird bzw. daß die angestrebten technischen und/oder ästhetischen Ergebnisse der Behandlung möglichst gut werden. Dabei werden unterschiedliche Kenngrößen definiert, die man als charakteristisch für das angestrebte Ergebnis hält. Diese Kenngrößen korrelieren auf unterschiedliche Weise mit einem oder mehreren der Parameter der chemischen und/oder physikalischen Prozesse, mit denen das erwünschte Ergebnis erreicht werden soll. Die Erfahrungen, welche Parameter der chemischen und/oder physikalischen Prozesse das Ergebnis auf welche Weise beeinflussen, sind meistens empirischer Natur und wurden in Versuchsreihen gewonnen und verbessert. Dennoch ist keineswegs sichergestellt, daß man bisher alle Korrelationen zwischen den Parametern der chemischen und/oder physikalischen Prozesse und den erzielten Ergebnissen der Behandlung hinreichend gut kennt und daß man diese Parameter so einstellt, daß das erwünschte Ergebnis möglichst optimal erreicht wird. Daher besteht ein Bedarf, die bekannten Korrelationen zu verfeinern sowie neue Korrelationen aufzufinden. Weiterhin besteht ein Bedarf, bei Abweichungen des erhaltenen Ergebnisses von dem angestrebten Ergebnis diejenigen Parameter der chemischen und/oder physikalischen Prozesse zu kennen und so variieren zu können, daß Abweichungen des erhaltenen Ergebnisses von dem angestrebten Ergebnis möglichst sicher korrigiert werden können.

Die Erfindung betrifft ein Verfahren zum Steuern einer Behandlungslinie, in der ein Werkstück unter Einwirkung chemischer und/oder physikalischer Prozesse bearbeitet wird, dadurch gekennzeichnet, daß man
a) eine Korrelation zwischen einem oder mehreren variablen Parametern der chemischen und/oder physikalischen Prozesse der Behandlungslinie und einer oder mehreren Kenngrößen, die für den Erfolg der Behandlung charakteristisch sind, erstellt, hieraus Regeln ableitet, die die Abhängigkeit der Kenngröße oder der Kenngrößen von den variablen Parametern beschreiben, und die Korrelation und/oder die hieraus abgeleiteten Regeln in einem Steuersystem für die Behandlungslinie abspeichert,
b) kontinuierlich oder diskontinuierlich die eine oder mehrere Kenngrößen mißt, die für den Erfolg der Behandlung charakteristisch sind, und
c) bei einer Abweichung dieser Kenngrößen von einem vorgegebenen Sollwertbereich oder bei einem signifikanten Trend dieser Kenngrößen, sich in Richtung der Grenzen des Sollwertbereichs zu verändern, denjenigen oder diejenigen variablen Parameter der chemischen und/oder physikalischen Prozesse der Behandlungslinie, der oder die am stärksten mit dieser Kenngröße korreliert sind, gemäß der im Teilschritt a) festgestellten Korrelation und/oder den hieraus abgeleiteten Regeln in diejenige Richtung verändert, die der Abweichung der Kenngröße oder der Kenngrößen vom Sollbereich entgegenwirkt.

Dabei ist es selbstverständlich ratsam, nur solche Parameter der chemischen und/oder physikalischen Prozesse der Behandlungslinie zu ändern, die die anderen für das Ergebnis charakteristischen Kenngrößen nicht negativ beeinflussen. Man wählt daher diejenigen Parameter der chemischen und/oder physikalischen Prozesse aus, deren Veränderung möglichst stark mit der abweichenden Kenngröße korreliert ist, und deren Änderung auf andere Kenngrößen keinen negativen Effekt hat. Dies kann beispielsweise mit einem auf Art eines Expertensystems arbeitenden Computerprogramms erfolgen.

Vorzugsweise führt man das erfindungsgemäße Verfahren in der Weise aus, daß im Teilschritt c) die Veränderung der variablen Parameter der chemischen und/oder physikalischen Prozesse der Behandlungslinie ohne menschliches Eingreifen automatisch erfolgt oder daß das Steuersystem für das Verfahren eine entsprechende Empfehlung zur Veränderung der variablen Parameter ausgibt. Die erste Alternative entspricht einem vollautomatischen Betreiben der Behandlungslinie, in der zweiten Alternative erhält das Bedienungspersonal als Ergebnis des erfindungsgemäßen Verfahrens konkrete Hinweise, welche Parameter auf welche Weise verändert werden sollten.

Vorzugsweise richtet man das Steuersystem für das erfindungsgemäße Verfahren so ein, daß es _{"}lernfähig" ist. Demnach setzt man das erfindungsgemäße Verfahren vorzugsweise derart ein, daß während des Betriebs der Behandlungslinie die Korrelation zwischen den variablen Parametern der chemischen und/oder physikalischen Prozesse der Behandlungslinie und einer oder mehreren Kenngrößen, die für den Erfolg der Behandlung charakteristisch sind, und/oder die hieraus abgeleiteten Regen angepaßt werden. Man sorgt also zum einen dafür, daß das Steuersystem kontinuierlich oder zu bestimmten Zeiten Information über die Werte möglichst vieler Parameter der chemischen und/oder physikalischen Prozesse der Behandlungslinie erhält. Dies kann beispielsweise dadurch geschehen, daß chemische Prozeßflüssigkeiten, die bei der Behandlung der Werkstücke eingesetzt werden, automatisch analysiert werden und die Ergebnisse der Analysen in das Steuersystem für das erfindungs-gemäße Verfahren übertragen werden. Selbstverständlich kann dies auch durch manuelle Eingabe geschehen. Zum anderen sorgt man dafür, daß das Steuersystem möglichst umfassend über den Erfolg der chemischen und/oder physikalischen Behandlung informiert wird, daß es also Informationen über die Werte möglichst vieler Kenngrößen erhält, die für das Behandlungsergebnis wesentlich sind. Soweit möglich, erfolgt auch dieses vorzugsweise automatisch, ansonsten aber durch manuelle Dateneingabe. Hierdurch wird das System in die Lage versetzt, die Korrelation zwischen den aktuellen Parametern und den erzielten Ergebnissen laufend zu verbessern und gegebenenfalls neue Korrelationen aufzufinden.

Auf welche Weise die Korrelation zwischen den einzelnen variablen Parametern der chemischen und/oder physikalischen Prozesse der Behandlungslinie und den Kenngrößen, die für den Erfolg der Behandlung charakteristisch sind, in dem Steuersystem abgelegt und ausgewertet werden, ist prinzipiell ohne Belang. Beispielsweise können die aus der empirisch gefundenen Korrelation abgeleiteten Regeln in Form mathematischer Gleichungen, als unscharfe Beziehungen (_{"}fuzzy logic") oder in Form modellfreier Algorithmen wie beispielsweise neuronaler Netze ausgedrückt werden. Für mathematische Gleichungen kommen beispielsweise multilineare Regressionsmethoden oder eine partielle kleinste Quadrate Regression in Frage.

In einer speziellen Ausführungsform kann das erfindungsgemäße Verfahren bei einer Anlage ausgeführt werden, in der eine chemische Veränderung undioder eine Beschichtung der Oberfläche des Werkstücks durchgeführt wird. Eine Beschichtung kann beispielsweise aus einem ein- oder mehrlagigen Lackaufbau bestehen. Dabei ist die chemische Natur des Werkstücks zunächst ohne Belang. Es kann sich beispielsweise um ein Werkstück aus einem natürlichen Stoff wie beispielsweise Holz, aus einem Kunststoff, einem keramischen Material oder aus Metall handeln. Beispielsweise kann es sich um eine Kunststoffoberfläche handeln, bei deren chemischer und/oder physikalischer Behandlung die Lackierbarkeit verbessert werden soll. Eine chemische Behandlung kann beispielsweise in einem oxidierenden Angriff auf die Kunststoffoberfläche bestehen. Als chemisch-physikalischer Prozeß kommt beispielsweise eine Plasmabehandlung in Frage. Bei metallischen Werkstücken kann es sich insbesondere um Prozesse handeln, bei denen die Metalloberfläche chemisch verändert wird. Hierdurch kann der Korrosionsschutz verbessert und/oder ein erwünschtes Aussehen der Oberfläche erzielt werden. Beispiele solcher Prozesse sind die Anodisierung, die Chromatierung, eine Behandlung mit komplexen Fluoriden, gegebenenfalls in Verbindung mit organischen Polymeren, eine alkalische Passivierung oder eine schichtbildende oder nichtschichtbildende Phosphatierung. Nachfolgend an eine derartige chemische Veränderung der Metalloberfläche kann diese zusätzlich beschichtet, beispielsweise lackiert oder emailliert werden. Je nach Art des Metalls und der chemischen Behandlung kann aber auch auf eine weitere Beschichtung verzichtet werden. In einer beispielhaften Ausführungsform des erfindungsgemäßen Verfahrens handelt es sich bei der Behandlungslinie um eine Phosphatieranlage zum Phosphatieren von Metalloberflächen vor einer Lackierung. Dabei führt man die Phosphatierung vorzugsweise als sogenannte schichtbildende Phosphatierung in Form einer Zinkphosphatierung durch. Hierbei bildet sich auf der Metalloberfläche eine nur wenige µm dicke Schicht aus kristallinem Zinkphosphat oder aus Phosphaten, in die als Kationen außer Zink weitere Metalle (Eisen, Nickel, Mangan ...) eingebaut sind. Solche Phosphatier-prozesse werden beispielsweise in der Metallindustrie, im Fahrzeugbau und in der Haushaltsgeräteindustrie eingesetzt.

In großtechnisch eingesetzten Anlagen wie beispielsweise im Automobilbau umfaßt die gesamte Phosphatieranlage in der Regel neben einer oder mehreren Phosphatierzonen eine oder mehrere Reinigungszonen sowie eine Aktivierungszone vor der Phosphatierung und häufig eine Nachpassivierungszone nach der Phosphatierung. Zwischen den einzelnen Behandlungsschritten in den unterschiedlichen Behandlungszonen wird in der Regel mit Wasser zwischengespült. Nach einer Nachpassivierung in der Nachpassivierungszone, auf die jedoch günstigenfalls auch verzichtet werden kann, folgt in der Regel eine Lackierung. Dabei ist im Automobilbau als ersten Lackierungsschritt derzeit eine kathodische Elektrotauchlackierung üblich. Man kann jedoch auch eine anodische Elektrotauchlackierung einsetzen oder die erste Lackschicht ohne Stromunterstützung durch Eintauchen der Werkstücke in das Lackbad oder durch Aufsprühen des Lacks aufbringen.

Beispielsweise kann in der Phosphatierungszone eine schichtbildende Phosphatierung durchgeführt werden, indem man die Metalloberfläche mit einer sauren wäßrigen Phosphatierlösung in Kontakt bringt, die 0,3 bis 3 g/l Zinkionen und 3 bis 30 g/l Phosphationen enthält. Dabei liegen bei den sauren Phosphatierlösungen mit einem pH-Wert im Bereich von etwa 2,8 bis etwa 3,8 die Phosphationen zum größten Teil als freie Phosphorsäure und als Dihydrogenphosphationen vor.

Die Zink-Gehalte in der Phosphatierlösung liegen vorzugsweise im Bereich von 0,4 bis 2 g/l und insbesondere von 0,5 bis 1,5 g/l, wie sie für Niedrig-Zink-Verfahren üblich sind. Das Gewichtsverhältnis Phosphationen zu Zinkionen in den Phosphatierbädern kann in weiten Grenzen schwanken, sofern es im Bereich zwischen 3,7 und 30 liegt. Ein Gewichtsverhältnis zwischen 10 und 20 ist besonders bevorzugt

Dabei kann das Phosphatierbad außer den Zink- und Phosphationen weitere Komponenten enthalten, wie sie derzeit in Phosphatierbädern üblich sind.

Vorzugsweise werden Phosphatierlösungen eingesetzt, die weitere ein- oder zweiwertige Metallionen enthalten, die sich erfahrungsgemäß günstig auf die Lackhaftung und den Korrosionsschutz der hiermit erzeugten Phosphatschichten auswirken. Demgemäß enthält die Phosphatierlösung vorzugsweise zusätzlich eines oder mehrere der folgenden Kationen:
0,1bis 4 g/l Mangan(II),
0,1bis 2,5 g/l Nickel (II),
0,2 bis 2,5 g/l Magnesium(II),
0,2 bis 2,5 g/l Calcium(II),
0,002 bis 0,2 g/l Kupfer(II),
0,1 bis 2 g/l Cobalt(II).

Beispielsweise enthält die Phosphatierlösung außer Zinkionen als zusätzliche Kationen 0,1 bis 4 g/l Manganionen und 0,002 bis 0,2 g/l Kupferionen und nicht mehr als 0,05 g/l, insbesondere nicht mehr als 0,001 g/l Nickelionen. Wünscht man jedoch an der herkömmlichen Trikation-Technologie festzuhalten, können Phosphatierbäder eingesetzt werden, die außer Zinkionen 0,1 bis 4 g/l Manganionen und zusätzlich 0,1 bis 2,5 g/l Nickelionen enthalten.

Außer den schichtbildenden zweiwertigen Kationen enthalten Phosphatierbäder in der Regel zusätzlich Natrium-, Kalium- und/oder Ammoniumionen zur Einstellung der freien Säure.

Bei Phosphatierbädern, die für unterschiedliche Substrate geeignet sein sollen, ist es üblich geworden, freies und/oder komplexgebundenes Fluorid in Mengen bis zu 2,5 g/l Gesamtfluorid, davon bis zu 800 mg/l freies Fluorid zuzusetzen. Bei Abwesenheit von Fluorid soll der Aluminiumgehalt des Bades 3 mg/l nicht überschreiten. Bei Gegenwart von Fluorid werden infolge der Komplexbildung höhere Al-Gehalte toleriert, sofern die Konzentration des nicht komplexierten Al 3 mg/l nicht übersteigt. Die Verwendung fluoridhaltiger Bäder ist daher vorteilhaft, wenn die zu phosphatierenden Oberflächen zumindest teilweise aus Aluminium bestehen oder Aluminium enthalten. In diesen Fällen ist es günstig, kein komplexgebundenes, sondern nur freies Fluorid, vorzugsweise in Konzentrationen im Bereich 0,5 bis 1,0 g/l, einzusetzen.

Für die Phosphatierung von Zinkoberflächen ist es nicht zwingend erforderlich, daß die Phosphatierbäder sogenannte Beschleuniger enthalten. Für die Phosphatierung von Stahloberflächen ist es jedoch erforderlich, daß die Phosphatierlösung einen oder mehrere Beschleuniger enthält. Solche Beschleuniger sind im Stand der Technik als Komponenten von Zinkphosphatierbädern geläufig. Hierunter werden Substanzen verstanden, die den durch den Beizangriff der Säure an der Metalloberfläche entstehenden Wasserstoff dadurch chemisch binden, daß sie selbst reduziert werden. Oxidierend wirkende Beschleuniger haben weiterhin den Effekt, durch den Beizangriff auf Stahloberflächen freigesetzte Eisen(II)-Ionen zur dreiwertigen Stufe zu oxidieren, so daß sie als Eisen(III)-Phosphat ausfallen können. Als Beschleuniger kommen beispielsweise in Frage:
0,2 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,01 bis 0,2 g/l Nitritionen
0,05 bis 4 g/l organische N-Oxide
0,1 bis 3 g/l Nitroguanidin.

Als Cobeschleuniger können zusätzlich Nitrationen in Mengen bis zu 10 g/l zugegen sein, was sich insbesondere bei der Phosphatierung von Stahloberflächen günstig auswirken kann. Bei der Phosphatierung von verzinktem Stahl ist es jedoch vorzuziehen, daß die Phosphatierlösung möglichst wenig Nitrat enthält. Nitratkonzentrationen von 0,5 g/l sollten vorzugsweise nicht überschritten werden, da bei höheren Nitratkonzentrationen die Gefahr einer sogenannten "Stippenbildung" besteht. Hiermit sind weiße, kraterartige Fehlstellen in der Phosphatschicht gemeint.

Aus Gründen der Umweltfreundlichkeit ist Wasserstoffperoxid, aus den technischen Gründen der vereinfachten Formulierungsmöglichkeiten für Nachdosierlösungen ist Hydroxylamin als Beschleuniger besonders bevorzugt. Die gemeinsame Verwendung dieser beiden Beschleuniger ist jedoch nicht ratsam, da Hydroxylamin von Wasserstoffperoxid zersetzt wird. Setzt man Wasserstoffperoxid in freier oder gebundener Form als Beschleuniger ein, so sind Konzentrationen von 0,005 bis 0,02 g/l Wasserstoffperoxid besonders bevorzugt. Dabei kann das Wasserstoffperoxid der Phosphatierlösung als solches zugegeben werden. Es ist jedoch auch möglich, Wasserstoffperoxid in gebundener Form in Form von Verbindungen einzusetzen, die im Phosphatierbad durch Hydrolysereaktionen Wasserstoffperoxid liefern. Beispiele solcher Verbindungen sind Persalze, wie Perborate, Percarbonate, Peroxosulfate oder Peroxodisulfate. Als weitere Quellen für Wasserstoffperoxid kommen ionische Peroxide wie beispielsweise Alkalimetallperoxide in Betracht.

Hydroxylamin kann als freie Base, als Hydroxylaminkomplex oder in Form von Hydroxylammoniumsalzen eingesetzt werden. Fügt man freies Hydroxylamin dem Phosphatierbad oder einem Phosphatierbad-Konzentrat zu, wird es aufgrund des sauren Charakters dieser Lösungen weitgehend als Hydroxylammonium-Kation vorliegen. Bei einer Verwendung als Hydroxylammonium-Salz sind die Sulfate sowie die Phosphate besonders geeignet. Im Falle der Phosphate sind aufgrund der besseren Löslichkeit die sauren Salze bevorzugt. Hydroxylamin oder seine Verbindungen werden dem Phosphatierbad in solchen Mengen zugesetzt, daß die rechnerische Konzentration des freien Hydroxylamins zwischen 0,1 und 10 g/l, vorzugsweise zwischen 0,2 und 6 g/l und insbesondere zwischen 0,3 und 2 g/l liegt.

Die Wirkung von Hydroxylamin als Beschleuniger kann durch die zusätzliche Verwendung von Chlorat unterstützt werden.

Als Beschleuniger kommen weiterhin organische N-Oxide in Betracht, wie sie in der deutschen Patentanmeldung DE-A-197 33 978.6 näher beschrieben sind. Als organisches N-Oxid ist N-Methylmorpholin-N-Oxid besonders bevorzugt. Vorzugsweise setzt man die N-Oxide in Kombination mit Co-Beschleunigern wie beispielsweise Chlorat, Wasserstoffperoxid, m-Nitrobenzolsulfonat oder Nitroguanidin ein. Nitroguanidin kann auch als alleiniger Beschleuniger verwendet werden, wie es beispielsweise in der DE-A-196 34 685 beschrieben ist.

Als weitere Parameter zur Steuerung von Phosphatierbädern sind dem Fachmann der pH-Wert und/oder die Gehalte an freier Säure und an Gesamtsäure bekannt, in der Regel als Punktzahl ausgedrückt. Unter der Punktzahl der freien Säure wird der Verbrauch in ml an 0,1-normaler Natronlauge verstanden, um 10 ml Badlösung bis zu einem pH-Wert von 3,6 zu titrieren. Analog gibt die Punktzahl der Gesamtsäure den Verbrauch in ml bis zu einem pH-Wert von 8,2 an. Werte der freien Säure zwischen 0 und 1,5 Punkten und der Gesamtsäure zwischen etwa 15 und etwa 30 Punkten liegen im technisch üblichen Bereich.

Die Phosphatierung kann im Spritzen, im Tauchen oder im Spritztauchen erfolgen. Die Einwirkungszeiten liegen dabei im üblichen Bereich zwischen etwa 1 und etwa 4 Minuten. Die Temperatur der Phosphatierlösung liegt im Bereich zwischen etwa 35 und etwa 70 °C und insbesondere zwischen etwa 40 und etwa 60 °C.

Demnach sind eine ganze Reihe physikalischer und chemischer Parameter wählbar, von denen der Erfolg der Phosphatierung und die Schutzwirkung des anschließend aufgebrachten Lacks abhängen. Physikalische Parameter sind insbesondere die Temperatur des Phosphatierbades und die Phosphatierzeit. Weiterhin ist wichtig, ob man die zu phosphatierenden Teile in die Phosphatierlösung eintaucht oder mit der Phosphatierlösung bespritzt oder ob man beide Verfahren in unterschiedlicher Reihenfolge nacheinander ausführt. Die einstellbaren chemischen Parameter bestehen in der Zusammensetzung der Phosphatierlösung sowie in den Gehalten an freier Säure und Gesamtsäure. Demnach können der oder die variablen Parameter ausgewählt sein aus der Temperatur der Phosphatierlösung, der Zinkkonzentration der Phosphatierlösung, dem Gehalt der Phosphatierlösung an freier Säure oder Gesamtsäure, der Konzentration eines oder mehrerer Beschleuniger in der Phosphatierlösung, der Konzentration anderer mehrwertiger Metallionen als Zink in der Phosphatierlösung, aus der Zeitdauer, in der die Metalloberfläche mit der Phosphatierlösung in Kontakt ist und aus der relativen Bewegung der Phosphatierlösung gegenüber der Metalloberfläche (Badbewegung, Spritz- oder Tauchverfahren, Spritzdruck).

Der Erfolg einer Phosphatierung, ausgedrückt in Kenngrößen, hängt jedoch nicht alleine von der Zusammensetzung des Phosphatierbades und von den physikalischen Parametern der Phosphatierung ab, sondern auch von vor- oder nachgeschalteten Behandlungsschritten. Beispielsweise kann die Zusammensetzung eines der Phosphatierung vorgeschalteten Reinigerbades für den Erfolg der Phosphatierung Bedeutung haben. Dies gilt ebenso für das Aktivierungsbad, das üblicherweise der Phosphatierung unmittelbar vorausgeht. Ebenso kann das Behandeln mit einem Nachpassivierungsbad nach der Phosphatierung und vor der Lackierung für Kenngrößen wie beispielsweise Lackhaftung und Korrosionswiderstand Bedeutung haben.

Reinigerbäder vor der Phosphatierung enthalten üblicherweise anionische und/oder nichtionische Tenside zusammen mit alkalischen Buildersubstanzen in wäßriger Lösung. Aktivierungsbäder enthalten in der Regel kolloide Titanphosphate in einer wäßrigen Lösung von Dinatriumhydrogenphosphat mit einem pH-Wert im Bereich zwischen etwa 8 und etwa 9. Nachpassivierungsbäder kennt man auf Basis von Chromaten bzw. Chromsäure, von reaktiven Polymeren wie beispielsweise aminosubstituierten Polyvinylphenolderivaten und auf Basis von komplexen Titan- und/oder Zirkonfluoriden. Daneben sind kupferhaltige Nachpassivierungsbäder bekannt. Die Wirkung dieser Bäder im Zusammenhang mit der Phosphatierung hängt von ihrer Zusammensetzung, der Temperatur, der Behandlungsdauer und der Behandlungsart (Spritzen oder Tauchen) ab. Bei zwischengeschalteten Spülschritten, insbesondere bei der letzten Spülung vor der kathodischen Tauchlackierung, kann auch die Reinheit des letzten Spülwassers, ausgedrückt durch dessen elektrischer Leitfähigkeit, Bedeutung haben. Im erfindungsgemäßen Verfahren kann die Korrelation dieser Parameter mit den Kenngrößen, die für den Erfolg der Behandlung charakteristisch sind, ermittelt und zum Steuern dieser Behandlungsschritte eingesetzt werden. Demnach besteht eine Ausführungsform des erfindungsgemäßen Verfahrens darin, daß der oder die variablen Parameter ausgewählt sind aus Temperatur und/oder Zusammensetzung eines oder mehrerer Reinigungsbäder vor der Phosphatierzone, eines Aktivierungsbades vor der Phosphatierzone und/oder eines Nachpassivierungsbades nach der Phophatierzone und/oder aus der Zeitdauer, in der diese Bäder mit der Metalloberfläche in Kontakt sind.

Für das ausgewählte Beispiel der Phosphatierung gibt es eine Reihe von Kenngrößen, die für den Erfolg der Behandlung charakteristisch sind. Die Kenngrößen können beispielsweise ausgewählt sein aus dem Schichtgewicht der Phosphatschicht, der chemischen Zusammensetzung der Phosphatschicht, dem Stromfluß durch die Phosphatschicht bei kathodischer Polarisation, der Dicke eines nach der Phosphatierung aufgebrachten Elektrotauchlacks, der Haftung eines nach der Phosphatierung aufgebrachten Lacks, der Oberflächenstruktur (Rauhigkeit, Welligkeit, Glanz etc.) eines nach der Phosphatierung aufgebrachten Lacks und der Korrosionsanfälligkeit des Werkstücks nach Phosphatierung und Lackierung.

Für die Messung dieser Kenngrößen stehen unterschiedliche Methoden zur Verfügung. Das Schichtgewicht wird am einfachsten durch Ablösen der Phosphatschicht und Differenzwägung eines Probebleches bestimmt. Zerstörungsfrei kann das Schichtgewicht beispielsweise über Infrarotspektroskopie (charakteristische Schwingungen der Phosphatgruppen) ermittelt werden. Die chemische Zusammensetzung der Phosphatschicht kann nach deren Ablösen konventionell analytisch, beispielsweise durch Atomabsorptionsspektroskopie, bestimmt werden. Nach entsprechender Eichung kann der Anteil ausgewählter Elemente in der Phosphatschicht auch durch Röntgenfluoreszensmessung ermittelt werden. Die Messung des Stromflusses durch die Phosphatschicht bei kathodischer Polarisation ist eine Schnellmethode, um den Korrosionswiderstand der Phosphatschicht abzuschätzen. Die Haftung eines nach der Phosphatierung aufgebrachten Lacks kann mit Standard-Methoden wie beispielsweise Erichsen-Tiefung, T-Bend oder durch einen Steinschlagtest in Verbindung mit korrosiver Belastung ermittelt werden. Zur Prüfung der Korrosionsanfälligkeit stehen unterschiedliche Testmethoden wie beispielsweise Salzsprühtest, Wechselklimatest oder Freibewitterungstest, in der Regel ausgeführt mit durch Einritzen bewußt beschädigten Probeblechen, zur Verfügung.

Sofern die Kenngrößen nicht on-line und automatisch im Produktionsprozeß bestimmt und in das Steuersystem für das Verfahren übertragen werden können, ist es erforderlich, sie getrennt zu bestimmen und die Befunde manuell (lokal oder an einem entfernten Ort) in das Steuersystem einzugeben.

Selbstverständlich ist es zum Beginn des erfindungsgemäßen Verfahrens erforderlich, Startwerte für die Parameter der chemischen und/oder physikalischen Prozesse vorzugeben. Diese Startwerte können aus bereits früher ermittelten Korrelationen hervorgehen. Es können jedoch auch Startwerte genommen werden, die aus dem Stand der Technik für das jeweilige Behandlungsverfahren bekannt sind oder die man aus Erfahrung her kennt. Das erfindungsgemäße Verfahren dient dann dazu, diese Startparameter im Laufe des Verfahrens so zu verfeinern, daß optimale Werte für die relevanten Kenngrößen erhalten werden. Hierbei kann wiederum vorgegeben werden, daß bestimmte Parameter nur innerhalb vorzugebender Grenzen variiert werden dürfen.

Vorzugsweise zeichnet man im Verlauf des erfindungsgemäßen Verfahrens die Ergebnisse der im Teilschritt b) durchgeführten Messungen der einen oder mehreren Kenngrößen und/oder die im Teilschritt c) vorgenommenen Maßnahmen auf einem Datenträger auf. Sie stehen dann für Zwecke der Qualitätssicherung und zur Überprüfung der Korrelationen mit gegebenenfalls anderen Verfahren als im erfindungsgemäßen Prozeß verwendet zur Verfügung. Dabei kann das Aufzeichnen auf einem Datenträger lokal erfolgen, d. h. an dem Ort, an dem das erfindungsgemäße Verfahren ausgeübt wird. Die Daten können jedoch auch - kontinuierlich, diskontinuierlich oder auf eine Anforderung hin - an einen entfernten Ort übertragen oder direkt dort eingegeben werden, der sich auch außerhalb der Fabrikationsstätte befinden kann, in der der chemische und/oder physikalische Prozeß abläuft. Beispielsweise kann dieser entfernte Ort beim Hersteller der Behandlungslösungen liegen, die in dem erfindungsgemäßen Verfahren eingesetzt werden. Dieser wird hierdurch laufend über Einzelheiten des Produktionsprozesses, beispielsweise über die Größen der variablen Parameter der chemischen und/oder physikalischen Prozesse der Behandlungslinie informiert, ohne daß sich Personal am Ort der Behandlungslinie aufhalten muß. Dabei wird vorzugsweise auch vorgesehen, daß die Grenzwerte der Parameter, innerhalb derer im Laufe des erfindungsgemäßen Verfahrens automatisch variiert werden kann, oder die aus der Kollelation gemäß Teilschritt a) erhaltenen Sollwerte lokal oder von einem entfernten Ort aus neu festgesetzt werden können.

Das erfindungsgemäße Verfahren hat den Vorteil, daß sich die Werte der chemischen und/oder physikalischen Parameter der Behandlungslinie automatisch anpassen, wenn sich, beispielsweise aufgrund eines Substratwechsels, die betrachteten Kenngrößen verändern. Durch das erfindungsgemäße Verfahren werden die Werte der Parameter so eingeregelt, wie sie für das jeweils vorliegende Substrat optimal sind. Ein manuelles Eingreifen ist hierfür entweder überhaupt nicht erforderlich oder kann sich darauf beschränken, neue Grenzen für die erlaubten Wertebereiche der einzelnen Parameter festzulegen, innerhalb derer die Sollwerte nach dem erfindungsgemäßen Verfahren eingestellt werden können.

### Ausführungsbeispiel

Das erfindungsgemäße Verfahren wurde an einer Phosphatierlinie erprobt, wie sie im Automobilbau üblich ist. Hierbei werden Automobilkarossen zunächst in drei Bädern gereinigt, dann aktiviert, phosphatiert, nachpassiviert, mit einem kathodisch abscheidbaren Elektrotauchlack grundiert und anschließend mit Füller und Decklack beschichtet.

Als Kenngrößen für den Erfolg dieser Behandlungskette wurde ausgewählt:
1. Steinschlag-Kennwert nach VW-Prüfvorschrift (K-Wert: bester Wert K = 1, schlechtester Wert K = 10),
2. Lackunterwanderung gemäß DIN 53167 nach jeweils 10 einwöchigen Prüfzyklen mit einem kompletten Lackaufbau,
3. Lackdicke des kompletten Laufaufbaus,
4. Dicke KTL = sich bei vorgegebenen elektrischen Abscheideparametern ausbildende Dicke des kathodischen Elektrotauchlacks.

### Variable Parameter: (in Klammer die Sollwerte)

### Reinigerbäder und Aktivierbad (="Vorbehandlung" vor Phosphatierung):

- Bad 1:: Alkalität des ersten Reinigungsbades (in Moläquivalenten; Sollwert: 80 - 110)
- Bad 2:: Alkalität des zweiten Reinigungsbades (in Moläquivalenten; Sollwert: 80 - 110)
- Bad 3:: Alkalität des dritten Reinigungsbades (in Moläquivalenten; Sollwert: 175- 185)
- Aktiv:: Leitfähigkeit des Aktivierungsbades in µS/cm² (als Maß für eingeschleppte Reinigerlösung)

### Parameter der Phosphatierung (einschließlich Nachpassivierung):

- G.S.:: Gesamtsäure (23-28 Punkte)
- F.S.:: freie Säure (0,7-1,1 Punkte)
- Zn:: Zinkkonzentration im Phosphatierbad (3,0 - 3,7 Punkte entsprechend 1 - 1,2 g/l)
- HAS:: Konzentrationd des Beschleunigers Hydroxylammoniumsulfat im Phosphatierbad (2-3,5 g/l)
- Cr(VI):: Konzentration im Nachpassivierungsbad (5,0-7,0 g/l)

### Parameter des KTL-Bades (Kathodische Tauchlackierung):

- pH:: pH-Wert
- LFK:: Leitfähigkeit im KTL-Bad in µS/cm²
- GFK:: Gesamt-Festkörperanteil in Gew.-% (19 - 20)
- PBV:: Pigment-Bindemittelverhältnis (0,57)
- MEQ:: Milliäquivalent Säure (45 - 55)

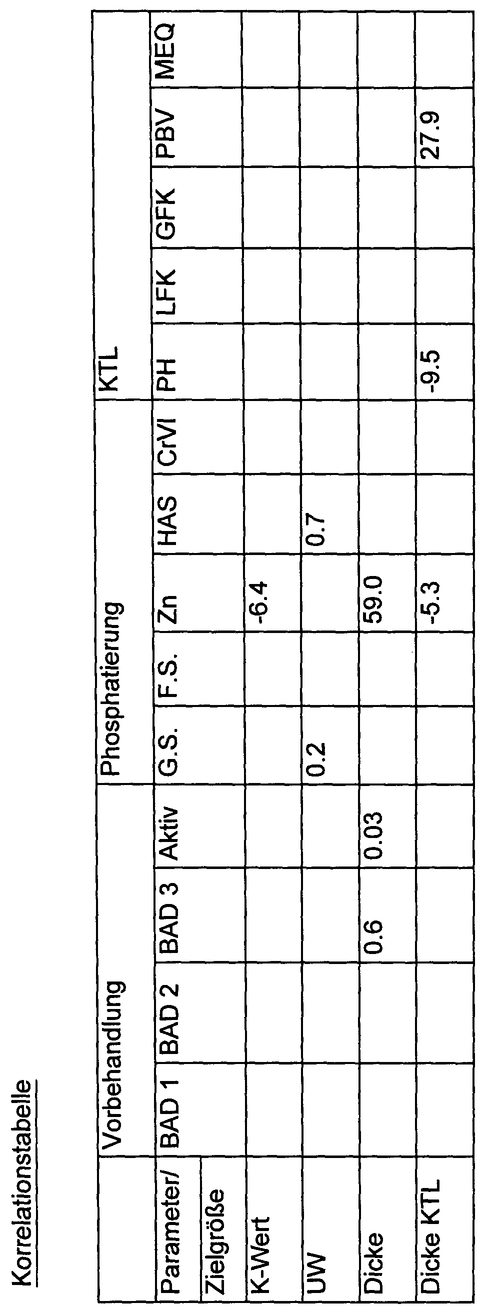

Die Korrelationstabelle zeigt die Korrelationsmatrix zwischen chemischen Parametern und untersuchter Kenngröße bei Schwankungen der Werte der chemischen Parameter, wie sie im Zeitverlauf an einer industriellen Automobil-Phosphatierlinie auftreten. Die Korrelation wurde nach der Methode der multilinearen Regression und Beurteilung der Signifikanz mittel _{"}Anova" (= analysis of variance) bestimmt. Signifikante Regressionskoeffizienten sind in die Tabelle eingetragen.

Damit korreliert der K-Wert negativ mit der Zink-Konzentration, d. h. eine erhöhte Zink-Konzentration im Phosphatierbad führt zu den erwünschten kleineren Werten des K-Werts. Demgegenüber korreliert die Lackunterwanderung insbesondere mit den Werten für die Gesamtsäure und für die Konzentration des Beschleunigers Hydroxylamin im Phosphatierbad. Die gesamte Lackdicke hängt mit dem Zink-Gehalt des Phosphatierbads zusammen und korreliert ansonsten mit den Parametern Bad 3 und Aktiv. Im Gegensatz zur Dicke des gesamten Lackaufbaus korreliert die Dicke der KTL-Schicht negativ mit der Zink-Konzentration im Phosphatierbad und ansonsten mit pH und PBV im KTL-Bad.

## Patentansprüche

1. Verfahren zum Steuern einer Behandlungslinie, in der ein Werkstück unter Einwirkung chemischer und/oder physikalischer Prozesse bearbeitet wird, **dadurch gekennzeichnet, daß** man
a) eine Korrelation zwischen einem oder mehreren variablen Parametern der chemischen und/oder physikalischen Prozesse der Behandlungslinie und einer oder mehreren Kenngrößen, die für den Erfolg der Behandlung charakteristisch sind, erstellt, hieraus Regeln ableitet, die die Abhängigkeit der Kenngröße oder der Kenngrößen von den variablen Parametern beschreiben, und die Korrelation und/oder die hieraus abgeleiteten Regeln in einem Steuersystem für die Behandlungslinie abspeichert,
b) kontinuierlich oder diskontinuierlich die eine oder mehrere Kenngrößen mißt, die für den Erfolg der Behandlung charakteristisch sind, und
c) bei einer Abweichung dieser Kenngrößen von einem vorgegebenen Sollwertbereich oder bei einem signifikanten Trend dieser Kenngrößen, sich in Richtung der Grenzen des Sollwertbereichs zu verändern, denjenigen oder diejenigen variablen Parameter der chemischen und/oder physikalischen Prozesse der Behandlungslinie, der oder die am stärksten mit dieser Kenngröße korreliert sind, gemäß der im Teilschritt a) festgestellten Korrelation und/oder den hieraus abgeleiteten Regeln in diejenige Richtung verändert, die der Abweichung der Kenngröße oder der Kenngrößen vom Sollbereich entgegenwirkt.

2. Verfahren nach Anspruch 1, **dadurch gekennzeichnet, daß** im Teilschritt c) die Veränderung der variablen Parameter der chemischen und/oder physikalischen Prozesse der Behandlungslinie ohne menschliches Eingreifen automatisch erfolgt oder **daß** das Steuersystem eine entsprechende Empfehlung zur Veränderung der variablen Parameter ausgibt.

3. Verfahren nach einem oder beiden der Ansprüche 1 und 2, **dadurch gekennzeichnet, daß** während des Betriebs der Behandlungsline die Korrelation zwischen den variablen Parametern der chemischen und/oder physikalischen Prozesse der Behandlungslinie und einer oder mehreren Kenngrößen, die für den Erfolg der Behandlung charakteristisch sind, und/oder die hieraus abgeleiteten Regeln angepaßt werden.

4. Verfahren nach einem oder mehreren der Ansprüche 1 bis 3, **dadurch gekennzeichnet, daß** die aus der Korrelation zwischen den einzelnen variablen Parametern der chemischen und/oder physikalischen Prozesse der Behandlungslinie und einer oder mehreren Kenngrößen, die für den Erfolg der Behandlung charakteristisch sind, abgeleiteten Regeln in Form mathematischer Gleichungen, als unscharfe Beziehungen oder in modellfreien Algorithmen ausgedrückt werden.

5. Verfahren nach einem oder mehreren der Ansprüche 1 bis 4, **dadurch gekennzeichnet, daß** es sich bei der Behandlungslinie um eine Anlage handelt, in der eine chemische Veränderung und/oder eine Beschichtung der Oberfläche des Werkstücks durchgeführt wird.

6. Verfahren nach einem oder mehreren der Ansprüche 1 bis 5, **dadurch gekennzeichnet, daß** die Ergebnisse der im Teilschritt b) durchgeführten Messungen der einen oder mehreren Kenngrößen und/oder die im Teilschritt c) vorgenommenen Maßnahmen auf einem Datenträger aufgezeichnet werden.

7. Verfahren nach einem oder mehreren der Ansprüche 1 bis 6, **dadurch gekennzeichnet, daß** die Grenzwerte der Parameter, innerhalb derer im Laufe des erfindungsgemäßen Verfahrens automatisch variiert werden kann, oder die aus der Kollelation gemäß Teilschritt a) erhaltenen Sollwerte lokal oder von einem entfernten Ort aus neu festgesetzt werden können.
